(19)

Europäisches Patentamt

European Patent Office

Office européen des brevets

(11) **EP 4 454 733 A1**

(12) **EUROPEAN PATENT APPLICATION**
published in accordance with Art. 153(4) EPC

(43) Date of publication:
**30.10.2024 Bulletin 2024/44**

(21) Application number: **22910614.1**

(22) Date of filing: **31.10.2022**

(51) International Patent Classification (IPC):
**B01D 39/14** (2006.01)    **B01D 39/10** (2006.01)
**B01J 7/00** (2006.01)    **B60R 21/264** (2006.01)

(52) Cooperative Patent Classification (CPC):
**B01D 39/10; B01D 39/14; B01J 7/00; B60R 21/264**

(86) International application number:
**PCT/JP2022/040750**

(87) International publication number:
**WO 2023/119894 (29.06.2023 Gazette 2023/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.12.2021 JP 2021207069**

(71) Applicants:
• **Fuji Filter Manufacturing Co., Ltd.**
**Tokyo 103-8308 (JP)**
• **Nippon Kayaku Kabushiki Kaisha**
**Tokyo 100-0005 (JP)**

(72) Inventors:
• **OHIGASHI, Tsutomu**
**Tokyo 103-8308 (JP)**
• **MATSUMOTO, Takashi**
**Tokyo 103-8308 (JP)**
• **SHIKAURA, Kenji**
**Himeji-shi, Hyogo 679-2123 (JP)**
• **ARAKI, Yasuhiro**
**Himeji-shi, Hyogo 679-2123 (JP)**
• **IWAI, Yoshitaka**
**Himeji-shi, Hyogo 679-2123 (JP)**

(74) Representative: **Stöckeler, Ferdinand et al**
**Schoppe, Zimmermann, Stöckeler
Zinkler, Schenk & Partner mbB
Patentanwälte
Radlkoferstrasse 2
81373 München (DE)**

(54) **FILTER, METHOD FOR MANUFACTURING FILTER, AND GAS GENERATOR**

(57)    An object of the present invention is to make a joined portion of a metal wire less likely to catch on other components and the like. A hollow cylindrical filter 200 is formed by winding one or a plurality of metal wires 220 in a helical and multilayered manner so that metal wire portions adjacent to each other in a direction toward an inner or outer diameter side extend in directions crossing each other. The filter includes a deformed joining part 231 including a first metal wire portion 220A having been pressed and deformed and a second metal wire portion 220B having been pressed and deformed via the first metal wire portion and joined to the first metal wire portion by resistance spot welding, where the deformed joining part penetrates into a communication space positioned at an inner side of the deformed joining part. Since the metal wire is pressed and deformed at the deformed joining part, the deformed joining part is less likely to catch on other components and the like during handling of the filter.

FIG.1

EP 4 454 733 A1

# Description

Field

The present invention relates to a filter, a method for manufacturing a filter, and a gas generator.

Background

A vehicle or the like such as an automobile is equipped with an airbag device that protects an occupant from an impact generated at the time of collision of the vehicle or the like. A gas generator that instantaneously inflates and deploys an airbag at the time of collision of a vehicle or the like instantaneously generates a large amount of gas by burning a gas-forming agent at the time of collision of the vehicle or the like, and then expands and deploys the airbag. The gas generator has incorporated therein a metallic filter for controlling blowout of high-temperature gas generated by burning a gas-forming agent and cooling the high-temperature gas.

Patent Literature 1 describes a wound-type filter for a gas generator that is formed by winding a metal wire at a predetermined helix angle $\alpha$. Patent Literature 1 describes that the metal wire is welded to a wound body.

Citation List

Patent Literature

Patent Literature 1: Japanese Patent Application National Publication No. 2009-533221

Summary

Technical Problem

Here, there is a possibility that a welded part formed on an outer side surface of the wound-type filter damages the filter itself or other portions and the like due to catching on other components and the like during handling such as transportation or an assembling operation of the filter.

The present invention has been made in view of the above circumstances, and an object thereof is to make a joined portion of a metal wire less likely to catch on other components and the like.

Solution to Problem

In order to achieve the above object, the present invention provides a filter having a hollow cylindrical shape and formed by winding one or a plurality of metal wires in a helical and multilayered manner so that metal wire portions adjacent to each other in a direction toward an inner or outer diameter side extend in directions crossing each other, the filter comprising a deformed joining part including a first metal wire portion having been pressed and deformed and a second metal wire portion having been pressed and deformed via the first metal wire portion and joined to the first metal wire portion by resistance spot welding, wherein the deformed joining part penetrates into a communication space positioned at an inner side of the deformed joining part.

Advantageous Effects of Invention

According to the present invention, a joined portion of a metal wire is less likely to catch on other components and the like.

Brief Description of Drawings

[FIG. 1] FIG. 1 is a schematic perspective view of a filter according to an embodiment of the present invention.
[FIG. 2] FIG. 2 is a schematic diagram for explaining a method for manufacturing a filter.
[FIG. 3] FIG. 3 is a schematic diagram of a disc-shaped gas generator having the filter according to the embodiment of the present invention incorporated therein.
[FIGS. 4] FIGS. 4(a) to 4(c) are partially enlarged perspective views of deformed joining parts.
[FIG. 5] FIG. 5 illustrates a real photograph of a portion of a filter corresponding to a first embodiment of the present invention.
[FIGS. 6] FIGS. 6 are schematic diagrams for explaining operations of the present invention.
[FIG. 7] FIG. 7 is a partially sectional perspective view illustrating a metal wire to be used for a filter according to a second embodiment of the present invention.
[FIG. 8] FIG. 8 illustrates a real photograph of a portion of a filter corresponding to the second embodiment of the present invention.
[FIGS. 9] FIGS. 9(a) and 9(b) are schematic diagrams for explaining a method for determining a forming position of a second joining part of the present invention.

Description of Embodiments

The present invention will be described below in detail with embodiments illustrated in the drawings. Constituent elements, types, combinations, shapes, and relative arrangements described in the embodiments are merely explanatory examples, and are not intended to limit the scope of the present invention solely thereto unless otherwise specified.

[Schematic shape of filter]

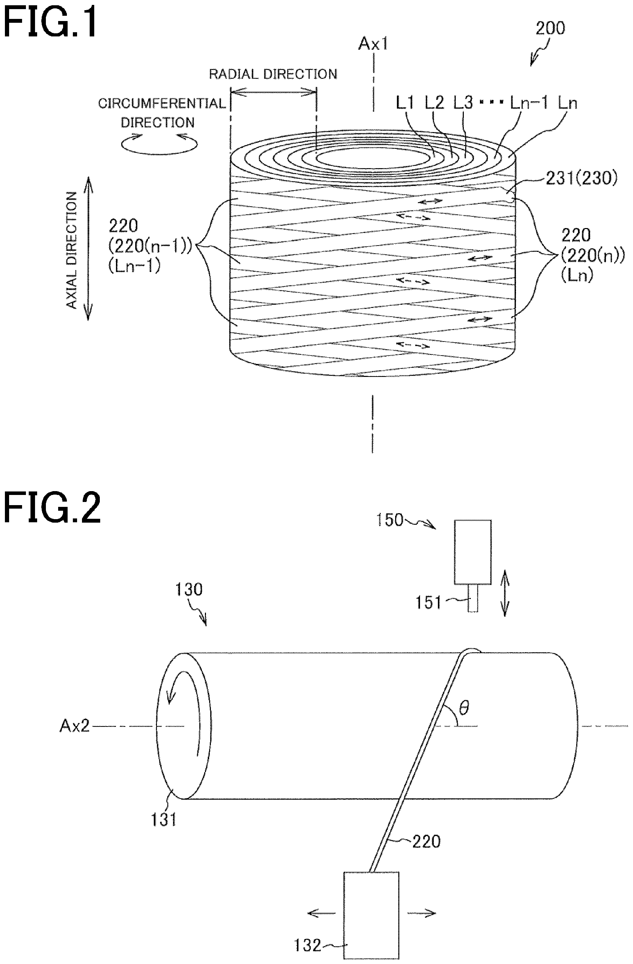

FIG. 1 is a schematic perspective view of a filter according to an embodiment of the present invention.

A hollow cylindrical filter (hereinafter, "filter") 200 according to the embodiment of the present invention is formed by winding at least one continuous metal wire 220 in a helical and multilayered manner at a certain pitch so as to have a certain tilt angle with respect to an axial direction (the up-down direction in FIG. 1). Here, respective layers of the metal wire 220 wound in the same direction are referred to as wire layers L1, L2, L3, .... The metal wires constituting each of the wire layers L1, L2, L3, ... extend in the same direction tilting with respect to the axial direction (a central axis Ax1) of the hollow cylindrical filter in a front view, and metal wires constituting the respective wire layers adjacent to each other in a direction toward an inner or outer diameter side extend in directions crossing each other (directions not parallel to each other).

An extending direction of a metal wire portion 220(n) (the thickness thereof is not illustrated in the drawings) constituting a wire layer Ln on the outermost layer in FIG. 1 (a longitudinal direction of the metal wire portion 220(n)) is a direction represented by a solid line arrow, and an extending direction of a metal wire portion 220(n-1) constituting a wire layer Ln-1 just inside the metal wire portion 220(n) (a longitudinal direction of the metal wire portion 220(n-1)) is a direction represented by a dashed line arrow.

That is, the filter 200 includes one wire layer (for example, the wire layer L1) formed by helically winding the metal wire 220 at a certain tilt angle with respect to the axial direction and another wire layer (for example, the wire layer L2) formed by helically winding the metal wire at a tilt angle different from that of the metal wire constituting the one wire layer L1 so as to overlap an outer circumferential side of the one wire layer L1. The metal wires respectively constituting the one wire layer L1 and the other wire layer L2 adjacent to the one wire layer L1 are configured to be non-parallel to the axial direction and to cross each other.

The filter 200 may be configured such that the tilt angle of the metal wire constituting a wire layer with respect to the axial direction changes in one wire layer.

The filter 200 is used to remove unnecessary substances and the like from various types of fluid such as a liquid and a gaseous body, and used to cool fluids passing through the filter at the same time depending on the purpose of use. First, this filter is configured to form fluid passages through which a fluid passes in a direction in which wire layers overlap each other, that is, in the radial direction of the filter. Fluids may be passed through the filter from an inner diameter side to an outer diameter side or from an outer diameter side to an inner diameter side. Here, the radial direction does not necessarily mean a diametrical direction (a radial direction) in a strict sense, but means a substantially radial direction with respect to an axial direction and a circumferential direction.

The size (such as an inner diameter, an outer diameter, and each size in an axial direction) of the filter is appropriately determined according to the configuration and size of an apparatus having the filter incorporated therein.

As the type of metal used as a material of this filter, iron, soft steel, stainless steel, nickel alloy, copper alloy, and the like can be mentioned. Among such materials, austenitic stainless steel (SUS304) is preferable.

Further, the diameter and cross-sectional shape of a metal wire (the sectional shape in a direction orthogonal to the longitudinal direction of a metal wire) to be used for the filter are appropriately determined according to the size of the filter, substances to be removed by the filter, pressure loss, and the like. For example, the section area of metal wire to be used for a filter for a gas generator is approximately 0.03 to 0.8 $mm^2$ (when a round wire having a true-circular cross section is used as a reference, its wire diameter is approximately 0.2 to 1 mm).

A metal wire formed by rolling a metal element wire having a true circular cross section into a predetermined shape is used for the filter. As the metal wire, a rectangular wire rolled so as to have a flat rectangular cross section or a deformed wire rolled so as to have a substantially V-shaped cross section is used. In the filter 200, the metal wire 220 is wound so as not to twist.

[Method for manufacturing filter]

FIG. 2 is a schematic diagram for explaining a method for manufacturing a filter.

In order to manufacture the filter 200, first, one end (starting end, winding start) of the metal wire 220 is locked to an appropriate portion of a spindle 131 constituting a winding device 130. In a state where a predetermined tension is applied to the metal wire 220, the spindle 131 is rotated at a predetermined speed in a certain direction around a central axis Ax2, and a guide member 132 that supplies the metal wire 220 is reciprocated at a predetermined speed along the central axis Ax2 of the spindle 131. With this operation, the metal wire 220 is wound in a helical and multilayered manner around an outer circumference of the spindle 131. Further, metal wires constituting wire layers adjacent to each other cross each other to form a mesh.

For example, in the first metal wire layer directly wound around the outer circumference of the spindle 131, when each metal wire 220 tilts at a predetermined angle θ in the clockwise direction with respect to an axial direction of the spindle 131, the metal wire 220 constituting the second metal wire layer wound around the outer circumference of the first metal wire layer tilts at the predetermined angle θ in the counterclockwise direction with respect to the axial direction of the spindle 131.

A starting end part of the metal wire 220 held at one end side (the right side in FIG. 2) in the axial direction of the spindle 131 is folded back toward the other end (the left side in FIG. 2) in the axial direction of the spindle 131 at a timing where the metal wire 220 is wound by two or more layers around the spindle 131. By further winding the metal wire 220 so as to overlap the folded-back starting end part, the starting end part is sandwiched and fixed between wire layers adjacent to each other. Subsequently, after the metal wire 220 is wound a predetermined times (a predetermined number of layers), the other end part (a terminal end part, a winding-end side) of the metal wire 220 is joined and fixed by resistance spot welding to an appropriate portion of the wound metal wire 220. A welding machine 150 used for resistance spot welding of the metal wire 220 includes an electrode 151 that supplies an electric current necessary for joining. The electrode 151 is configured to be capable of advancing to and retreating from the spindle 131, and can press the metal wire 220 with a predetermined pressure and supply an electric current for j oining in a pressing state.

After the end part of the metal wire 220 is joined, the metal wire 220 is cut with an appropriate method to remove it from the spindle 131, thereby obtaining a hollow cylindrical body.

An angle (a winding angle) of the metal wire 220 with respect to the axial direction of the spindle 131 and an interval (a pitch) between metal wires 220 adj acent to each other in the axial direction can be appropriately changed by adjusting the ratio of the rotation speed of the spindle 131 to the movement speed of the guide member 132. By appropriately changing the diameter, the winding angle, the pitch, and the number of windings of the metal wire, pressure loss of a fluid that passes through the filter can be controlled to an appropriate value.

The spindle 131 has a substantially columnar or a cylindrical shape, and is generally made of a metal such as stainless steel, copper alloy, or aluminum alloy. The inner diameter of the filter 200 corresponds to the outer diameter of the spindle 131, and the outer diameter of the filter 200 is appropriately adjusted according to the diameter (thickness) and the number of windings of the metal wire 220.

The hollow cylindrical body manufactured with the method described above is used as a filter as it is without being subjected to sintering in its entirety.

[Gas generator having filter incorporated therein]

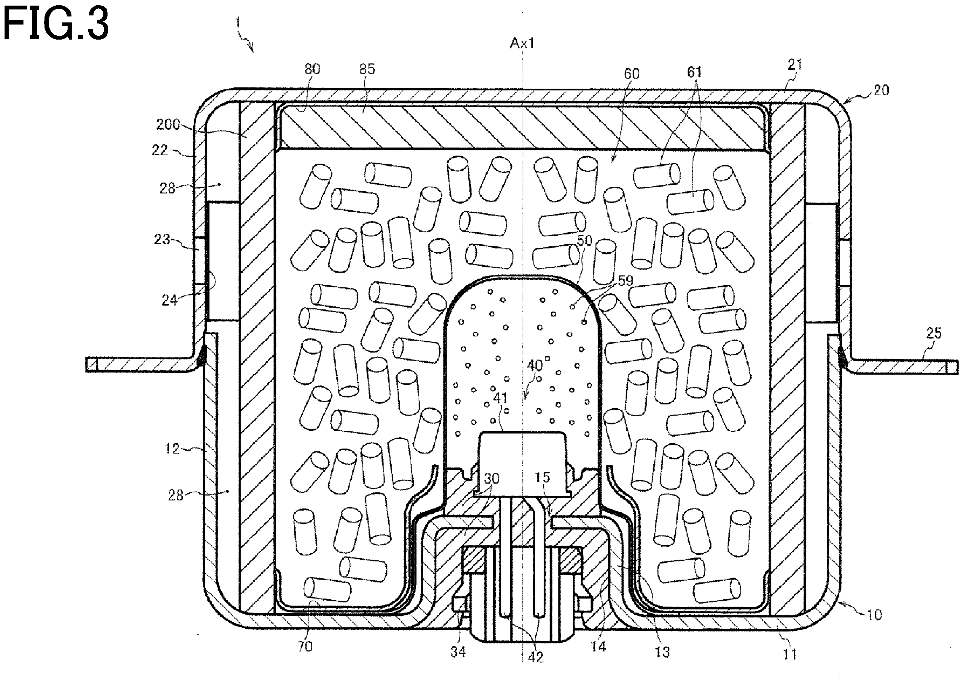

FIG. 3 is a schematic diagram of a disc-shaped gas generator having the filter according to the embodiment of the present invention incorporated therein.

The disc-shaped gas generator 1 includes a substantially cylindrical housing whose both end faces (upper and lower ends in FIG. 3) in an axial direction are closed. In an accommodation space formed inside the housing, a holding part 30, an igniter 40, a cup-shaped member 50, a transfer charge 59, a gas-forming agent 61, a lower support member 70, an upper support member 80, a cushion member 85, and the filter 200, and the like are accommodated as internal components. In the accommodation space provided inside the housing, a combustion chamber 60 mainly accommodating the gas-forming agent 61 among the internal constituent components described above is positioned.

The housing includes a lower-side shell 10 having a substantially bottomed cylindrical shape whose upper end face is open (having an upper surface opening) and an upper-side shell 20 having a substantially bottomed cylindrical shape whose lower end face is open (having a lower surface opening). The lower-side shell 10 and the upper-side shell 20 are formed by press working of a metal plate made of stainless steel, iron steel, aluminum alloy, stainless alloy, or the like.

In a state where the upper surface opening and the lower surface opening are caused to face each other, an upper end part of the lower-side shell 10 is press-fitted to a lower end part of the upper-side shell 20 and contact parts of both shells or vicinities of the contact parts are joined to each other by electronic beam welding, laser welding, friction welding, or the like, thereby integrating the shells as one unit.

The upper-side shell 20 includes a flange part 25 projecting in a direction toward an outer diameter side from a lower end edge. The flange part 25 is a portion for fixing the disc-shaped gas generator 1 to an external member (for example, a retainer provided in an airbag device, or the like).

From a central part of a bottom plate part 11 of the lower-side shell 10, a projecting cylinder part 13 is projecting toward a top plate part 21 side of the upper-side shell 20. Accordingly, a recess part 14 is formed at an outer side of the housing, that is, at the opposite side of the projecting cylinder part 13. In an end face of the projecting cylinder part 13 at the top plate part 21 side, an opening part 15 that communicates between the inside and outside of the housing is formed.

The holding part 30 that fixes the igniter 40 is provided at the projecting cylinder part 13 side and at the recess part 14 side through the opening part 15. The holding part 30 is made of an insulative resin and is formed by insert molding.

The igniter 40 is means for generating a flame and includes an igniting part 41 including an ignition charge and a resistor that ignites the ignition charge and a pair of terminal pins 42 that supply electric power to the resistor. The resistor generates Joule heat and ignites the ignition charge. Female connector parts 34 electrically connected to the terminal pins 42 are located in the recess part 14. The female connector parts 34 are fixed in a state where the airtightness inside the accommodation space is secured by the holding part 30.

The cup-shaped member 50 is assembled to the bottom plate part 11 so as to cover the projecting cylinder part 13, the holding part 30, and the igniter 40. The transfer charge 59 is accommodated in a hollow part of the cup-shaped member 50.

When the transfer charge 59 is ignited in response to activation of the ignitor 40, the cup-shaped member 50 bursts, deforms, or melts according to a pressure rise or transfer of heat generated in the internal space of the cup-shaped member 50. In the internal space of the housing, a space surrounding a portion where the cup-shaped member 50 is located is the combustion chamber 60 having the gas-forming agent 61 accommodated therein. On an outer side surface of the cup-shaped member 50, the gas-forming agent 61 is located adjacent to the outer side surface.

In a space surrounding the combustion chamber 60 having the gas-forming agent 61 accommodated therein in radial directions of the housing, the filter 200 according to the embodiment of the present invention is located along the inner circumference of the housing. The filter 200 has a cylindrical shape and is located such that its central axis Ax1 substantially coincides with the axial direction of the housing.

When a gas generated in the combustion chamber 60 passes through the filter 200, the filter 200 functions as cooling means for cooling the gas by drawing high-temperature heat of the gas, and also functions as removal means for removing residues (slag) and the like contained in the gas. The filter 200 is located away from a peripheral wall part 12 of the lower-side shell 10 and a peripheral wall part 22 of the upper-side shell 20 that constitute peripheral wall parts of the housing such that a gap part 28 with a predetermined size is formed between the filter 200 and the peripheral wall parts 12 and 22.

In the peripheral wall part 22 of the upper-side shell 20 at portions facing the filter 200, a plurality of gas jetting ports 23 are provided. The plurality of gas jetting ports 23 are used to lead the gas having passed through the filter 200 to outside of the housing. A seal tape 24 is attached on each of the gas jetting ports 23. The seal tape 24 secures the airtightness of the combustion chamber 60.

At the bottom plate part 11 side inside the combustion chamber 60, there is located an annular lower support member 70 that fixes the filter 200 to the housing and prevents a generated gas from leaking from a gap between a lower end of an axial end part of the filter 200 and the bottom plate part 11. At the top plate part 21 side inside the combustion chamber 60, there is located a disc-shaped upper support member 80 that fixes the filter 200 to the housing and prevents a generated gas from leaking from a gap between an upper end of an axial end part of the filter 200 and the top plate part 21. The lower support member 70 and the upper support member 80 are formed by press working of a steel plate made of common steel, special steel, or the like.

A disc-shaped cushion member 85 that presses the gas-forming agent 61 toward the bottom plate part 11 side is located between the upper support member 80 and the gas-forming agent 61. The cushion member 85 is made of rock wool, foam resin, or the like and prevents the gas-forming agent 61 from being crushed due to vibrations or the like.

The gas generator 1 is operated as follows. First, when a vehicle has a collision, the igniter 40 is activated by energization from a control unit. In response to the activation of the igniter 40, the transfer charge 59 starts combustion. The cup-shaped member 50 bursts and the gas-forming agent 61 burns, and a large amount of gas is generated. The gas passes through the inside of the filter 200 and flows into the gap part 28. As the internal pressure inside the housing increases, the seal tapes 24 closing the gas jetting ports 23 are torn and opened and the gas jets out to outside of the housing through the gas jetting ports 23. The jetted out gas inflates and deploys an airbag.

[First embodiment]

As illustrated in FIG. 1, in the filter 200 according to the embodiment of the present invention, the metal wire 220 includes, at appropriate portions in a longitudinal direction of the metal wire 220, joining parts 230 joined to appropriate portions of the filter 200 by resistance spot welding. At least one of the joining parts 230 is a deformed joining part 231 having been pressed and deformed. The deformed joining part 231 is bent and deformed into a recessed shape by being pressed by a force stronger than a pressurizing force necessary and sufficient enough for joining the metal wire 220. The deformed joining part 231 is preferably formed at an end part (a terminal end part) at a winding end side of the metal wire 220.

<Joined portion>

The filter 200 has a plurality of contact parts at which metal wire portions are in contact with each other. Among the plurality of contact parts, portions other than the joining parts 230 are unjoining parts that are not joined to any portion. Any heat treatment (for example, heat treatment for sintering) to join all the contact parts (or a plurality of contact parts) at once is not applied on the filter 200. Therefore, the manufacturing cost of the filter 200 can be made low and the manufacturing time of the filter 200 can be shortened.

<Deformed shape of deformed joining part>

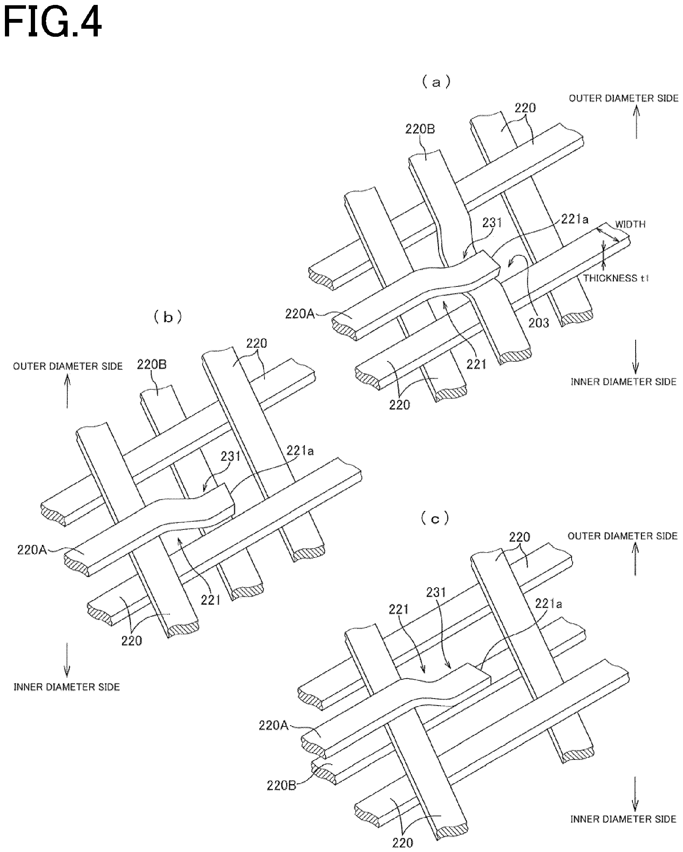

FIGS. 4(a) to 4(c) are partially enlarged perspective views of deformed joining parts.

For convenience of description, FIGS. 4 illustrate examples of a deformed joining part formed of a terminal end part of a metal wire and a metal wire portion positioned at an inner diameter side of a terminal end part. However, the positional relationship between two metal wire portions forming a deformed joining part is not limited thereto. Further, the deformed joining part may be formed of three or more metal wire portions. The shape examples described below may be combined with each other unless they are contradictory to each other.

The deformed joining part 231 illustrated in FIGS. 4 is formed at a terminal end part 221 of the metal wire 220. The metal wire portion forming the deformed j oining part 231 is deformed so as to be locally recessed from a shape at the time of winding (a helical shape along a circumferential direction).

The deformed joining part 231 is constituted to include a first metal wire portion (a first portion) 220A deformed by a pressing force (a pressurizing force) directly applied from the electrode 151 (pressing means or pressurizing means) illustrated in FIG. 2 and a second metal wire portion (a second portion) 220B joined to the first metal wire portion 220A.

The metal wire 220 illustrated in FIGS. 4 is a so-called rectangular wire that is rolled so that its cross section has a flat rectangular shape. The metal wire 220 is wound without twisting in the filter 200. That is, the metal wire 220 is wound such that one surface of the metal wire 220 in a thickness t1 direction constantly faces the inner diameter side (or the outer diameter side), and the other surface of the metal wire 220 in the thickness t1 direction constantly faces the outer diameter side (or the inner diameter side).

«Shape example 1»

As illustrated in FIG. 4(a), in the deformed j oining part 231, both of the first metal wire portion 220A and the second metal wire portion 220B are pressed and deformed (curvature-deformed) in the direction toward the inner diameter side. The second metal wire portion 220B is pressed and deformed via the first metal wire portion 220A. The first metal wire portion 220A and the second metal wire portion 220B illustrated in FIG. 4(a) are metal wires belonging to different wire layers and extending in directions crossing each other. A wire layer to which the first metal wire portion 220A belongs and a wire layer to which the second metal wire portion 220B belongs may be radially adjacent to each other or may not be radially adjacent to each other.

A meshed communication space 203 that allows a to-be-filtered fluid to pass through in radial directions is formed in the filter 200. The deformed joining part 231 penetrates into the inside of the communication space 203 positioned at an inner side of the deformed joining part 231. At the side (the inner diameter side in FIG. 4(a)) toward which the first and second metal wire portions 220A and 220B are deformed, the communication space 203 that can accommodate the first and second metal wire portions 220A and 220B after being deformed (that is, the entirety of the deformed joining part 231) is present. In the communication space 203 into which the deformed joining part 231 penetrates, there are no other portions of the metal wire 220 that stop deformation of the first and second metal wire portions 220A and 220B. Conversely, it is controlled so that metal wire portions having a positional relationship in which the communication space 203 capable of accommodating the deformed joining part 231 is present at a side toward which the metal wires are pressed and deformed are selected as the first and second metal wire portions 220A and 220B that form the deformed joining part 231.

By selecting the first and second metal wire portions 220A and 220B having such a positional relationship, the deformed joining part 231 can be formed by a minimum necessary pressurizing force. Further, the deformed joining part 231 is hardly influenced by tensions of other metal wire portions not constituting this deformed joining part 231, and the shape retainability of the deformed joining part 231 is improved.

The first and second metal wire portions 220A and 220B are deformed so as to respectively penetrate into other wire layers that are different from the wire layers that the respective metal wire portions belong to. That is, the first and second metal wire portions 220A and 220B are pressed toward the inner side so as to be positioned at the inner diameter side of radial positions of the first and second metal wire portions 220A and 220B at the time of winding. It is preferable that the amount of pressure deformation of the first metal wire portion 220A or the first and second metal wire portions 220A and 220B is equal to or more than at least the thickness t1 of the metal wire 220 as compared with an undeformed shape.

«Shape example 2»

As illustrated in FIG. 4(b), the deformed j oining part 231 may have a deformation form in which only the first metal wire portion 220A directly pressed from the electrode 151 illustrated in FIG. 2 is deformed. In this case, while the second metal wire portion 220B is left to be positioned in a wire layer to which the second metal wire portion 220B belongs, the second metal wire portion 220B is j oined to the first metal wire portion 220A without deviating from this wire layer. This deformed joining part 231 is formed of at least metal wire portions belonging to respective wire layers not adjacent to each other. FIG. 4(b) illustrates the deformed joining part 231 formed of metal wire portions extending in directions crossing each other.

The first metal wire portion 220A is deformed so as to penetrate into a wire layer different from a wire layer to which these metal wire portions belong. The amount of pressure deformation of the first metal wire portion 220A is preferably at least equal to or more than the thickness t1 of the metal wire 220 as compared with an undeformed shape.

«Shape example 3»

As illustrated in FIG. 4(c), the deformed joining part 231 may have a form in which the first metal wire portion 220A and the second metal wire portion 220B extending in the same direction are joined to each other. Such a deformed joining part 231 is formed of at least metal wire portions belonging to wire layers not adjacent to each other.

The deformed joining part 231 illustrated in FIG. 4(c) has a form in which only the first metal wire portion 220A is deformed, but may have a form in which the second metal wire portion 220B is also deformed.

<Forming position of deformed joining part>

The deformed joining part 231 is formed at an appropriate portion on an outer side surface of the filter 200. Specifically, the deformed joining part 231 is formed on an appropriate portion of any of the outer circumferential surface (radially outer side surface, outermost circumferential part), the inner circumferential surface (radially inner side surface, innermost circumferential part), and axial end faces of the filter 200.

Particularly, the deformed joining part 231 is preferably formed at an appropriate portion of a metal wire portion constituting an outermost layer Ln (FIG. 1) of the filter 200. Particularly, the deformed joining part 231 is preferably formed at the terminal end part 221 as illustrated in FIGS. 4 and the like.

<Method for forming deformed joining part>

The deformed joining part 231 is formed by joining the first metal wire portion 220A to the second metal wire portion 220B after the first metal wire portion 220A is pressed and deformed. When the deformed joining part 231 is formed at the terminal end part 221 of the metal wire 220, the metal wire 220 is cut with an appropriate method after the terminal end part 221 (the first metal wire portion 220A) is joined to the second metal wire portion 220B positioned at an inner diameter side of the terminal end part 221.

<Modified embodiment>

It is also possible to configure that the filter 200 has only one joining part 230 in the filter 200 and this joining part 230 is the deformed joining part 231 formed at the terminal end part 221 of the metal wire 220.

The filter 200 may have a plurality of joining parts 230. In this case, at least one of the joining parts 230 is the deformed joining part 231. When the filter 200 has a plurality of joining parts 230, the deformed joining part 231 is preferably formed at least at the terminal end part 221 of the metal wire 220.

The joining part 230 (an undeformed joining part) that does not constitute the deformed joining part 231 is welded by being subjected to a pressurizing force necessary and sufficient enough for joining the metal wire 220. The respective joining parts 230 are individually subjected to joining treatment.

<First example>

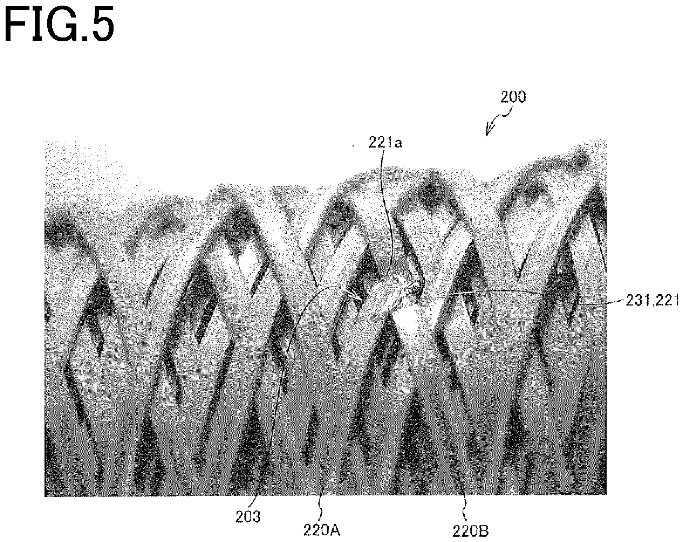

FIG. 5 illustrates a real photograph of a portion of a filter corresponding to a first embodiment of the present invention. FIG. 5 is an example in which the terminal end part 221 of the metal wire 220 is made into the deformed joining part 231 by resistance spot welding.

The terminal end part 221 as the first metal wire portion 220A is resistance-spot welded to the second metal wire portion 220B that is positioned at the inner diameter side of the terminal end part 221 and crosses the first metal wire portion 220A. The terminal end part 221 is pressed and deformed in the direction toward the inner diameter side by a pressing force applied from the electrode 151 (FIG. 2), and the second metal wire portion 220B is also pressed and deformed in the direction toward the inner diameter side by a pressing force applied from the terminal end part 221. Since the terminal end part 221 is pressed and deformed, during handling such as transportation or an assembling operation of the filter 200, the likelihood that a cut end 221a of the metal wire 220 catches on other components and the like and damages other portions and the like decreases.

<Operations>

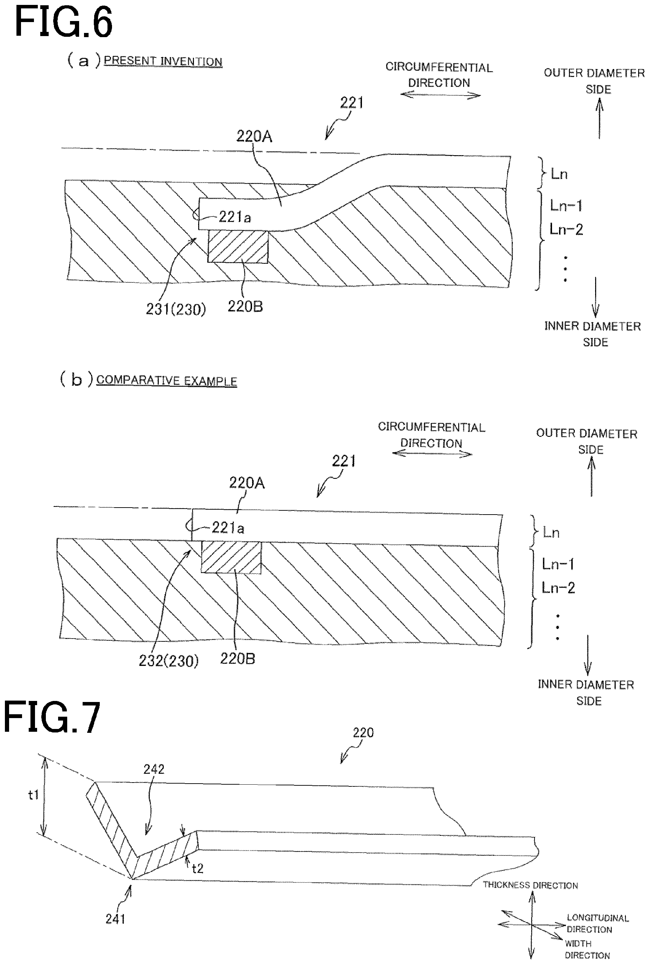

FIGS. 6 are schematic diagrams for explaining operations of the present invention. FIG. 6(a) illustrates an example in which the terminal end part 221 of the metal wire 220 is made into the deformed joining part 231, and FIG. 6(b) illustrates a comparative example in which the terminal end part 221 of the metal wire 220 is made into an undeformed joining part 232. In FIGS. 6, the direction perpendicular to the drawing corresponds to the axial direction of the filter.

As illustrated in FIG. 6(b), at the undeformed joining part 232 that is not pressed and deformed in the direction toward the inner diameter side, when the cut end 221a is projecting from the second metal wire 220B, there is a possibility that the cut end 221a catches on other components and the like or damages other portions and the like.

On the other hand, as illustrated in FIG. 6(a), the deformed joining part 231 according to the embodiment of the present invention is pressed and deformed in the direction toward the inner diameter side. Therefore, even when the cut end 221a is projecting from the second metal wire 220B, the likelihood that the cut end 221a catches on other components and the like and damages other portions and the like decreases.

<Effects>

In the present embodiment, since the deformed joining part is pressed and deformed inward, the deformed joining part is less likely to catch on other components and the like during handling of the filter. Therefore, the deformed joining part is less likely to peel off. Particularly, when a terminal end part of a metal wire is made into a deformed joining part, the terminal end part can be prevented from catching on other components to peel off. Further, the handleability of the filter is improved.

[Second embodiment]

A second embodiment of the present invention is characterized such that the metal wire forming the filter is a deformed wire having a substantially V-shaped cross section.

Such a metal wire is obtained by rolling and deforming a metal element wire having a true-circular cross section by using a pair of rollers that have a predetermined surface shape corresponding to the deformed wire.

Portions other than the configuration resulting from the external shape of the metal wire are identical to those of the first embodiment. In the following descriptions, differences between the first embodiment and the second embodiment are mainly described.

<Wire shape>

FIG. 7 is a partially sectional perspective view illustrating a metal wire to be used for the filter according to the second embodiment of the present invention.

The metal wire 220 has a substantially V-shaped cross section. The metal wire 220 has a convex portion 241 extending across the entire length in the longitudinal direction at one side in a thickness direction, and has a concave portion 242 extending across the entire length in the longitudinal direction at the other side (opposite side, back side) in the thickness direction. On the back side of the convex portion 241 having a bent shape projecting to the one side, the concave portion 242 concaved to have a shape symmetrical to the convex portion 241 is formed. As viewed in cross section, the metal wire 220 is bent to have a substantially constant thickness t2.

The metal wire 220 is wound in the filter 200 without twisting. That is, the metal wire 220 is wound such that the convex portion 241 formed at one side in the thickness direction of the metal wire 220 constantly faces the inner diameter side (or the outer diameter side) and the concave portion 242 formed at the opposite side in the thickness direction of the metal wire 220 constantly faces the outer diameter side (or the inner diameter side).

<Wire shape of joining part>

Also in the present embodiment, as described in the first embodiment based on FIGS. 4, the metal wire portions forming the deformed joining part 231 are deformed so as to be locally recessed from the shape at the time of winding (a helical shape along the outer circumferential surface).

An electric current for welding is supplied to the first and second metal wire portions 220A and 220B in a state where the first metal wire portion 220A is pressed to be bent toward the second metal wire portion 220B. Therefore, the first metal wire portion 220A deforms so that the height of the convex portion 241 decreases (or the depth of the concave portion 242 decreases) along with the second metal wire portion 220B. In this case, the first and second metal portions 220A and 220B may deform into a flat shape. Alternatively, the first metal wire portion 220A deforms according to the external shape of the second metal wire 220B.

<Second example>

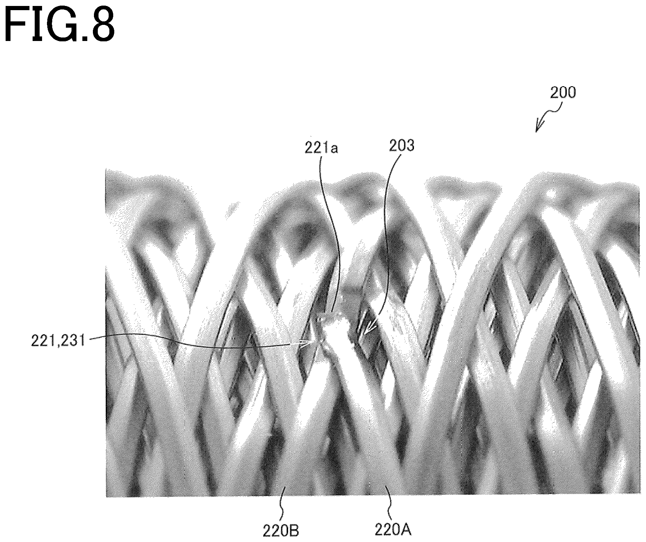

FIG. 8 illustrates a real photograph of a portion of a filter corresponding to the second embodiment of the present invention.

The terminal end part 221 as the first metal wire portion 220A is resistance-spot welded to the second metal wire portion 220B that is positioned at an inner diameter side of the terminal end part and crosses the first metal wire portion 220A. The terminal end part 221 is pressed and deformed in the direction toward the inner diameter side, and the second metal wire portion 220B is also pressed and deformed in the direction toward the inner diameter side by being subjected to a pressing force from the terminal end part 221.

The terminal end part 221 is joined to the second metal wire portion 220B in a state where the terminal end part 221 is deformed so as to decrease the heights of the convex portion 241 and the concave portion 242 (FIG. 7) of the terminal end part by being pressed in the direction toward the inner diameter side. Alternatively, the terminal end part 221 is joined to the second metal wire portion 220B in a state where the terminal end part 221 is deformed to correspond to a shape of the second metal wire portion 220B by being pressed in the direction toward the inner diameter side. The first metal wire portion 220A increases its joint area with the second metal wire portion 220B at the terminal end part 221, so that joint strength at the deformed joining part 231 can be increased.

<Effects>

The present embodiment achieves effects identical to those of the first embodiment. Further, when the metal wire is a deformed wire, the joint area between the first metal wire portion and the second metal wire portion at the deformed joining part can be increased, so that joint strength can be improved.

[Third embodiment]

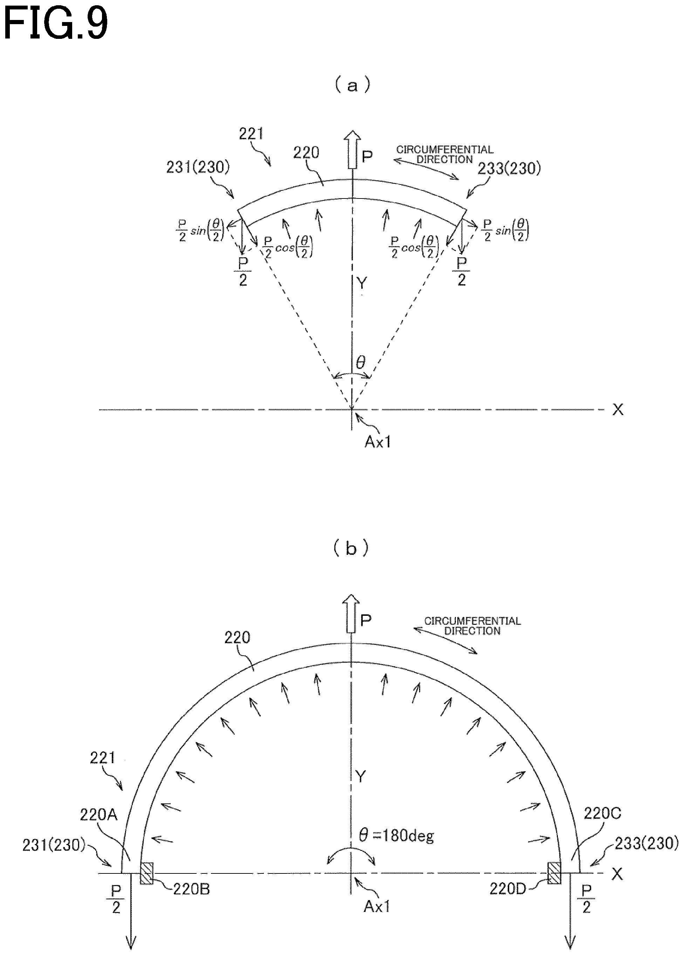

FIGS. 9(a) and 9(b) are schematic diagrams for explaining a method for determining a forming position of a second joining part of the present invention. FIGS. 9 respectively correspond to diagrams of the metal wire 220 portion positioned between two joining parts 230 and 230 taken from a filter and viewed from one side in an axial direction.

The filter according to the present embodiment is characterized such that the metal wire 220 includes two joining parts 230 and 230 joined to each other by resistance spot welding. One of the joining parts 230 is the deformed joining part 231 formed at the terminal end part 221 and the other one of the joining parts 230 is a second joining part 233 formed at the other portion of the wire layer Ln positioned at the outermost circumference. The second joining part 233 is formed of, in the metal wire 220, a third metal wire portion (a third portion) 220C belonging to the outermost layer Ln along with the first metal wire portion 220A and a fourth metal wire portion (a fourth portion) 220D positioned at an inner diameter side of the third metal wire portion 220C. The second joining part 233 may be made into a deformed joining part or may not be made into a deformed joining part.

An external force that expands the diameter of the filter in the direction toward the outer diameter side from the inside of the hollow part is applied to the filter incorporated in the gas generator 1 (FIG. 3) at the time of gas generation.

As illustrated in FIG. 9(a), a reaction force P/2 is decomposed into a radial-direction component force and a circumferential-direction component force.

Radial-direction component force: $\frac{P}{2}\cos\left(\frac{\theta}{2}\right)$

, circumferential-direction component force: $\frac{P}{2}\sin\left(\frac{\theta}{2}\right)$

When it is $\theta \neq 180$ degrees, the radial-direction component force remains with respect to P/2. This means that a force that peels off the joining parts 230 and 230 in radial directions has occurred.

As illustrated in FIG. 9(b), when $\theta = 180$ degrees is established, the radial reaction force becomes zero and the circumferential reaction force becomes maximum (= P/2). That is, when $\theta = 180$ degrees is established, a stress that peels off the metal wire portions 220A and 220C forming the joining parts 230 and 230 in the direction toward the outer diameter side does not occur, and this is most appropriate in terms of the positional relationship of the joining parts 230 and 230.

Further, when $\theta = 180$ degrees is established, it is also advantageous from the viewpoint of preventing a shunt current at the time of resistance spot welding.

<Effects>

When metal wires rolled to be thin are welded to each other, it is difficult to secure a penetration width of welding in the thickness direction of the metal wires. Therefore, the welded part of a filter tends to become comparatively low in resistance with respect to a peeling force in the radial direction.

When a joining part in a metal wire constituting the outermost layer is provided only at a terminal end part, at least the entirety of load that the wire of the outermost layer receives is received by the terminal end part.

As in the present embodiment, when the joining part provided in the metal wire constituting the outermost layer is provided at two portions which are the terminal end part and another part, the terminal end part receives only a load that a metal wire between the joining parts receives, and a load the terminal end part is subjected to can be reduced. Accordingly, the risk that the joining part at the terminal end part peels off and the filter unwinds can be reduced.

[Summary of actions and effects of aspects of present invention]

<First aspect>

The present aspect relates to the filter 200 having a hollow cylindrical shape and formed by winding one or a plurality of metal wires 220 in a helical and multilayered manner so that metal wire portions adjacent to each other in a direction toward an inner or outer diameter side extend in directions crossing each other. The filter is characterized to include the deformed joining part 231 including the first metal wire portion 220A having been pressed and deformed and the second metal wire portion 220B having been pressed and deformed via the first metal wire portion and joined to the first metal wire portion by resistance spot welding, where the deformed joining part penetrates into a communication space positioned at an inner side of the deformed j oining part.

According to the present aspect, the pressed deformed part is less likely to catch on other components and the like.

<Second aspect>

The present aspect relates to the filter 200 having a hollow cylindrical shape and formed by winding one or a plurality of metal wires 220 in a helical and multilayered manner so that metal wire portions adjacent to each other in a direction toward an inner or outer diameter side extend in directions crossing each other. The filter is characterized to include the deformed joining part 231 including the first metal wire portion 220A having been pressed and deformed and the second metal wire portion 220B joined to the first metal wire portion by resistance spot welding, where the first metal wire portion penetrates into a wire layer different from a wire layer to which the first metal wire portion belongs and is joined to the second metal wire, and the second metal wire portion does not deviate from a wire layer to which the second metal wire portion itself belongs.

According to the present aspect, the pressed deformed part is less likely to catch on other components and the like.

<Third aspect>

The filter 200 according to the present aspect is characterized such that the deformed joining part 231 is formed at an end part (the terminal end part 221) at a winding end side of the metal wire 220.

According to the present aspect, the terminal end part is less likely to catch on other components and the like and less likely to peel off.

<Fourth aspect>

The filter 200 according to the present aspect is characterized to include the second joining part 233 at which a third metal wire portion 220C positioned in an outermost layer Ln and a fourth metal wire portion 220D positioned at an inner diameter side of the third metal wire portion are joined by resistance spot welding, where the deformed joining part 231 and the second joining part are formed to have a positional relationship that does not cause any stress to peel off the first metal wire portion 220A and the third metal wire portion in a direction toward an outer diameter side when an external force that expands the diameter of the filter in the direction toward the outer diameter side from the inside of a hollow part is applied.

According to the present aspect, the terminal end part 221 receives only a load that a metal wire between joining parts receives, and a load the terminal end part is subjected to can be reduced. Accordingly, the risk that the joining part at the terminal end part peels off and the filter unwinds can be reduced.

<Fifth aspect>

The filter 200 according to the present aspect is characterized such that a first metal wire portion 220A constituting the deformed joining part 231 is pressed and deformed by at least an amount equal to or more than the thickness t1 of the first metal wire portion.

According to the present aspect, the deformed joining part is pressed by a force stronger than a pressurizing force necessary and sufficient enough for joining a metal wire and is reliably pressed to the inner side accordingly, so that the deformed joining part is less likely to catch on other components and the like.

<Sixth aspect>

The present aspect relates to the gas generator 1 characterized such that the filter 200 according to each aspect is incorporated therein.

The gas generator according to the present aspect has effects described in each aspect.

<Seventh aspect>

A method for manufacturing the filter 200 according to the present aspect is characterized by including a wire winding process in which one or a plurality of metal wires 220 are wound in a helical and multilayered manner so that metal wire portions adjacent to each other in a direction toward an inner or outer diameter side extend in directions crossing each other, and a joining process in which a first portion (the first metal wire portion 220A) of the metal wire is pressed and deformed and the first portion is joined to a second portion (the second metal wire portion 220B) of the metal wire by resistance spot welding, where in the joining process, the second portion is pressed and deformed via the first portion and the first and second portions are caused to penetrate into a communication space positioned at an inner side of the first and second portions.

The filter manufactured with the method according to the present aspect has effects identical to those of the first aspect.

<Eighth aspect>

A method for manufacturing the filter 200 according to the present aspect is characterized by including a wire winding process in which one or a plurality of metal wires 220 are wound in a helical and multilayered manner so that metal wire portions adjacent to each other in a direction toward an inner or outer diameter side extend in directions crossing each other, and a joining process in which a first portion (the first metal wire portion 220A) of the metal wire is pressed and deformed and the first portion is joined to a second portion (the second metal wire portion 220B) of the metal wire by resistance spot welding, where in the joining process, while the second portion is prevented from deviating from a wire layer to which the second portion belongs, the first portion is joined to the second portion in a state where the first portion is caused to penetrate into a wire layer different from a wire layer to which the first portion belongs.

The filter manufactured with the method according to the present aspect has effects identical to those of the second aspect.

Reference Signs List

1...(disc-shaped) gas generator, 10...lower-side shell, 11...bottom plate part, 12...peripheral wall part, 13...projecting cylinder part, 14...recess part, 15... opening part, 20... upper-side shell, 21...top plate part, 22...peripheral wall part, 23...gas jetting port, 24...seal tape, 25 ... flange part, 28... gap part, 30... holding part, 34...female connector part, 40... igniter, 41...igniting part, 42...terminal pin, 50...cup-shaped member, 59...transfer charge, 60... combustion chamber, 61... gas-forming agent, 70...lower support member, 80...upper support member, 85... cushion member, 130... winding device, 131...spindle, 132...guide member, 150...welding machine, 151...electrode (pressing means), 200...filter, 203... communication space, 220... metal wire, 220(n), 220(n-1),...metal wire portion, 220A...first metal wire portion (first portion), 20B...second metal wire portion (second portion), 220C... third metal wire portion (third portion), 220D...fourth metal wire portion (fourth portion), 221...terminal end part, 221a...cut end, 230...joining part, 231...deformed joining part, 232... undeformed joining part, 233 ... second joining part, 241... convex portion, 242... concave portion, L1, L2 ... Ln...wire layer, Ax1...central axis (of filter), Ax2...central axis (of spindle), t1... thickness (of entire metal wire), t2... thickness (of deformed wire)

**Claims**

1. A filter having a hollow cylindrical shape and formed by winding one or a plurality of metal wires in a helical and multilayered manner so that metal wire portions adjacent to each other in a direction toward an inner or outer diameter side extend in directions crossing each other, the filter comprising

   a deformed joining part including a first metal wire portion having been pressed and deformed and a second metal wire portion having been pressed and deformed via the first metal wire portion and joined to the first metal wire portion by resistance spot welding, wherein the deformed joining part penetrates into a communication space positioned at an inner side of the deformed joining part.

2. A filter having a hollow cylindrical shape and formed by winding one or a plurality of metal wires in a helical and multilayered manner so that metal wire portions adjacent to each other in a direction toward an inner or outer diameter side extend in directions crossing each other, the filter comprising

   a deformed joining part including a first metal wire portion having been pressed and deformed and a second metal wire portion joined to the first metal wire portion by resistance spot welding, wherein the first metal wire portion penetrates into a wire layer different from a wire layer to which the first metal wire portion belongs and is joined to the second metal wire, and the second metal wire portion does not deviate from a wire layer to which the second metal wire portion itself belongs.

3. The filter according to claim 1 or 2, wherein the deformed joining part is formed at an end part at a winding end side of the metal wire.

4. The filter according to claim 3, comprising

   a second joining part at which a third metal wire portion positioned in an outermost layer and a fourth metal wire portion positioned at an inner diameter side of the third metal wire portion are joined by resistance spot welding, wherein the deformed joining part and the second joining part are formed to have a positional relationship that does not cause any stress to peel off the first metal wire portion and the third metal wire portion in a direction toward an outer diameter side when an external force that expands the diameter of the filter in the direction toward the outer diameter side from inside of a hollow part is applied.

5. The filter according to any one of claims 1 to 4, wherein the first metal wire portion constituting the deformed joining part is pressed and deformed by at least an amount equal to or more than a thickness t1 of the first metal wire portion.

6. A gas generator having the filter according to any one of claims 1 to 5 incorporated therein.

7. A method for manufacturing a filter comprising:

   a wire winding process in which one or a plurality of metal wires are wound in a helical and multilayered manner so that metal wire portions adjacent to each other in a direction toward an inner or outer diameter side extend in directions crossing each other; and
   a joining process in which a first portion of the metal wire is pressed and deformed and the first portion is joined to a second portion of the metal wire by resistance spot welding, wherein
   in the joining process, the second portion is pressed and deformed via the first portion and the first and second portions are caused to penetrate into a communication space positioned at an inner side of the first and second portions.

8. A method for manufacturing a filter comprising:

   a wire winding process in which one or a plurality of metal wires are wound in a helical and multilayered manner so that metal wire portions adjacent to each other in a direction toward an inner or outer diameter side extend in directions crossing each other; and
   a joining process in which a first portion of the metal wire is pressed and deformed and the first portion is joined to a second portion of the metal wire by resistance spot welding, wherein
   in the joining process, while the second portion is prevented from deviating from a wire layer to which the second portion belongs, the first portion is joined to the second portion in a state where the first portion is caused to penetrate into a wire layer different from a wire layer to which the first portion belongs.

# FIG.1

RADIAL DIRECTION

CIRCUMFERENTIAL DIRECTION

Ax1

200

L1 L2 L3 · · · Ln−1 Ln

231(230)

AXIAL DIRECTION

220 (220(n−1)) (Ln−1)

220 (220(n)) (Ln)

# FIG.2

150

151

130

Ax2

131

$\theta$

220

132

# FIG.3

EP 4 454 733 A1

# FIG.4

( a )

OUTER DIAMETER SIDE

220

220B

231    221a    WIDTH

220A    THICKNESS t1

203

221

220    INNER DIAMETER SIDE

( b )

OUTER DIAMETER SIDE    220B    220

231    221a

220A

221

220

INNER DIAMETER SIDE

( c )

220    OUTER DIAMETER SIDE

221    231    221a

220A

220B

INNER DIAMETER SIDE

220

14

# FIG.5

# FIG.6

( a ) PRESENT INVENTION

CIRCUMFERENTIAL DIRECTION

OUTER DIAMETER SIDE

221

220A

221a

231(230)    220B

Ln
Ln-1
Ln-2

INNER DIAMETER SIDE

( b ) COMPARATIVE EXAMPLE

CIRCUMFERENTIAL DIRECTION

OUTER DIAMETER SIDE

221

220A

221a

232(230)    220B

Ln
Ln-1
Ln-2

INNER DIAMETER SIDE

# FIG.7

220

242

$t1$

241

$t2$

THICKNESS DIRECTION

LONGITUDINAL DIRECTION

WIDTH DIRECTION

# FIG.8

# FIG.9

(a)

(b)

## INTERNATIONAL SEARCH REPORT

International application No.

**PCT/JP2022/040750**

### A. CLASSIFICATION OF SUBJECT MATTER

***B01D 39/14***(2006.01)i; ***B01D 39/10***(2006.01)i; ***B01J 7/00***(2006.01)i; ***B60R 21/264***(2006.01)i
FI: B01D39/14 D; B01D39/10; B01J7/00 A; B60R21/264

According to International Patent Classification (IPC) or to both national classification and IPC

### B. FIELDS SEARCHED

Minimum documentation searched (classification system followed by classification symbols)

B01D39/00-41/04; B01J7/00; B60R21/16-21/33; B01J4/00-7/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 10-324220 A (NIPPON KAYAKU CO LTD) 08 December 1998 (1998-12-08)<br>paragraphs [0021]-[0022], [0026]-[0030], fig. 6 | 1-8 |
| A | WO 2016/068250 A1 (FUJI FILTER MANUFACTURING CO., LTD.) 06 May 2016 (2016-05-06)<br>entire text, all drawings | 1-8 |
| A | WO 2005/075050 A1 (CHUO HATSUJO KABUSHIKI KAISHA) 18 August 2005 (2005-08-18)<br>entire text, all drawings (in particular, fig. 8, 12) | 1-8 |
| A | JP 2019-182175 A (DAICEL CORP) 24 October 2019 (2019-10-24)<br>entire text, all drawings | 1-8 |
| A | JP 2020-142222 A (FUJI FILTER MANUFACTURING CO., LTD.) 10 September 2020 (2020-09-10)<br>entire text, all drawings | 1-8 |
| A | JP 2009-533221 A (ACS IND INC) 17 September 2009 (2009-09-17)<br>entire text, all drawings | 1-8 |

☐ Further documents are listed in the continuation of Box C.　　☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **07 December 2022** | **20 December 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/040750**

| Patent document cited in search report | | | Publication date (day/month/year) | Patent family member(s) | | | Publication date (day/month/year) |
|---|---|---|---|---|---|---|---|
| JP | 10-324220 | A | 08 December 1998 | (Family: none) | | | |
| WO | 2016/068250 | A1 | 06 May 2016 | US entire text, all drawings EP KR CN | 2017/0312670 3213805 10-2017-0075728 106999815 | A1 A1 A A | |
| WO | 2005/075050 | A1 | 18 August 2005 | US entire text, all drawings | 2007/0169454 | A1 | |
| JP | 2019-182175 | A | 24 October 2019 | US entire text, all drawings WO CN | 2021/0008475 2019/198584 111936355 | A1 A1 A | |
| JP | 2020-142222 | A | 10 September 2020 | (Family: none) | | | |
| JP | 2009-533221 | A | 17 September 2009 | US entire text, all drawings WO EP CN | 2010/0146922 2008/143606 2032232 101522282 | A1 A1 A1 A | |

Form PCT/ISA/210 (patent family annex) (January 2015)

**EP 4 454 733 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009533221 A